# EUROPEAN PATENT APPLICATION

(11) **EP 3 151 537 A1**
(43) Date of publication of application: **05.04.2017**
(21) Application number: 15799084.7
(22) Date of filing: 19.05.2015
(51) Int. Cl.: H04N 5/232, H04M 11/00, H04N 5/225, H04Q 9/00

(54) **CONTROL DEVICE, COMMUNICATION SYSTEM, CONTROL METHOD, AND PROGRAM**

(30) Priority: 26.05.2014 JP 2014108001
(71) Applicant: NEC Platforms, Ltd., Kanagawa 213-8511 (JP)
(72) Inventor: IGAWA, Masaya, Kawasaki-shi Kanagawa 213-8511 (JP)
(74) Representative: Vossius & Partner Patentanwälte Rechtsanwälte mbB
(86) International application number: PCT/JP2015/002505
(87) International publication number: WO 2015/182062

(57) **Abstract**

The present invention remotely controls an electric apparatus and readily checks results of the control. This control device includes: an imaging unit which performs imaging to capture an image; a network communication unit which transmits the image captured by the imaging unit to a communication terminal via a communication network and receives a signal transmitted from the communication terminal via the communication network; and a control signal transmission unit which transmits control signal for controlling an electric apparatus to the electric apparatus based on the signal received by the network communication unit.

## Description

### [Technical Field]

The present invention relates to a control device, a communication system, a control method, and a program for controlling equipment.

### [Background Art]

In recent years, there have been conceived the techniques of transmitting a predetermined signal from a location away from home to a device that has an infrared remote control function via a public network, and controlling transmission of infrared radiation to an electric apparatus inside premises (see patent literature 1 (PTL1), for example). Using the techniques enables to activate power of an air conditioner or other apparatuses that are installed inside home, from a location away from home.

Further, each of manufacturers has launched products called network cameras in recent years. Users install network cameras at home and connect the network cameras to a communication network. This allows the users to check images captured through imaging with the network cameras by using communication devices, such as smartphones, from locations away from home.

Still further, there have been conceived the schemes, such as HEMS (Home Energy Management System) and ECHONET lite, for controlling electric apparatuses inside premises and checking the results of the control.

Patent literature 2 (PTL2) relates to remote control of electric apparatuses and proposes sensing a state of an electronic apparatus by a remote control device with a sensor and audibly notifying a user of the state of the electric apparatus. Patent literature 3 (PTL3) relates to remote control of home electric appliances and proposes connecting a personal computer connected to a communication line with an infrared transmission device via a cable and remotely controlling a home electric appliance by the infrared transmission device. Patent literature 4 (PTL4) relates to remote control of home electric appliances and proposes installing a remote control and a camera in a camera unit in such a way that the transmission direction of the remote controller and the capturing direction of the camera are in parallel to each other, and displaying an image captured by the camera in this way on a remote operation device. In PTL4, a user can remotely operate an intended apparatus such as a home electric appliance while viewing an image displayed on the remote operation device to check that the transmission direction of the remote controller is facing towards the intended apparatus.

### [Citation List]

### [Patent Literature]

[PTL1] Japanese Patent Application Laid-open No. Hei9-69885
[PTL2] Japanese Patent Application Laid-open No. 2001-86256
[PTL3] Japanese Patent Application Laid-open No. 2003-125466
[PTL4] Japanese Patent Application Laid-open No. 2004-7106

### [Summary of Invention]

### [Technical Problem]

The systems that use the infrared transmission technology and network cameras described above have a problem that it is incapable of remotely controlling an electric apparatus inside premises and checking the result of the control. Further, HEMS and ECHONET Lite schemes have a problem that the schemes cannot be readily installed in ordinary households because their penetration rates are low and equipment requires standardization.

An object of the present invention is to provide a control device, a communication system, a control method, and a program for solving the problems described above.

### [Solution to Problem]

A control device of the present invention, comprises:
an imaging unit which performs imaging to capture an image;
a network communication unit which transmits the image captured by the imaging unit to a communication terminal via a communication network and receives a signal transmitted from the communication terminal via the communication network; and
a control signal transmission unit which transmits a control signal for controlling an electric apparatus to the electric apparatus based on the signal received by the network communication unit.

A communication system of the present invention, comprises:
a communication terminal which, when accepting a predetermined input, transmits a signal based on the input; and
a control device which has an imaging function, transmits an image captured using the imaging function to the communication terminal via a communication network, receives a signal transmitted from the communication terminal via the communication network, and transmits a control signal for controlling an electric apparatus to the electric apparatus based on the received signal;
wherein the communication terminal displays an image transmitted from the control device.

A control method of the present invention, performs:
a process of performing imaging to capture an image;
a process of transmitting the captured image to a communication terminal via a communication network;
receiving a signal transmitted from the communication terminal via the communication network; and
a process of transmitting a control signal for controlling an electric apparatus to the electric apparatus based on the received signal.

A program of the present invention is a program for causing a computer to execute the steps of:
performing imaging to capture an image;
transmitting the captured image to a communication terminal via a communication network;
receiving a signal transmitted from the communication terminal via the communication network; and
transmitting a control signal for controlling an electric apparatus to the electric apparatus based on the received signal.

### [Advantageous Effect of Invention]

As described above, according to the present invention, it is possible to remotely control electric apparatuses and readily check the result of the control.

### [Brief Description of Drawings]

[Fig. 1] Fig. 1 is a diagram illustrating a first exemplary embodiment of a control device according to the present invention.
[Fig. 2] Fig. 2 is a flowchart illustrating an example of a control method performed in the control device illustrated in Fig. 1
[Fig. 3] Fig. 3 is a diagram illustrating a second exemplary embodiment of a control device according to the present invention.
[Fig. 4] Fig. 4 is a diagram illustrating an example of an internal configuration of the control device illustrated in Fig. 3.
[Fig. 5] Fig. 5 is a diagram illustrating an example of an external view of the control device illustrated in Fig. 3.
[Fig. 6] Fig. 6 is a diagram illustrating an example of an internal configuration of a communication terminal illustrated in Fig. 3.
[Fig. 7] Fig. 7 is a diagram illustrating an example of in-premises connection of the control device illustrated in Fig. 3.
[Fig. 8] Fig. 8 is a sequence diagram illustrating an example of a control method in a communication system illustrated in Fig. 3.
[Fig. 9] Fig. 9 is a diagram illustrating an example of an image displayed on a display unit at step S16.
[Fig. 10] Fig. 10 is a diagram illustrating an example of an image displayed on the display unit at step S21.
[Fig. 11] Fig. 11 is a diagram illustrating a third exemplary embodiment of a control device according to the present invention.
[Fig. 12] Fig. 12 is a diagram illustrating an example of an external view of the control device illustrated in Fig. 11.
[Fig. 13] Fig. 13 is a diagram illustrating an arrangement example of a plurality of electric apparatuses inside premises.
[Fig. 14] Fig. 14 is a diagram illustrating a fifth exemplary embodiment of a control device according to the present invention.
[Fig. 15] Fig. 15 is a diagram illustrating a sixth exemplary embodiment of a control device according to of the present invention.
[Fig. 16] Fig. 16 is a sequence diagram illustrating an example of a control method in the sixth exemplary embodiment of the control device according to the present invention.

### [Description of Embodiments]

Exemplary embodiments of the present invention will be described below with reference to the drawings.

### (First Exemplary Embodiment)

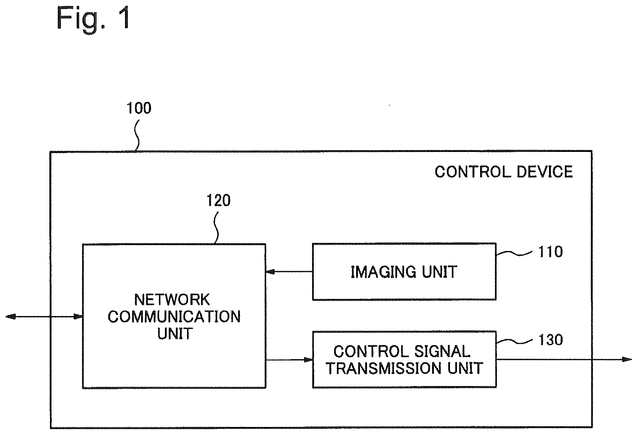

Fig. 1 is a diagram illustrating a first exemplary embodiment of a control device according to the present invention.

A control device 100 in the present exemplary embodiment includes an imaging unit 110, a network communication unit 120, and a control signal transmission unit 130. Note that Fig. 1 illustrates an example of primary components relating to the present exemplary embodiment among the components provided in the control device 100.

The imaging unit 110 is, for example, a camera or the like, and includes the function of performing imaging to capture images.

The network communication unit 120 includes an interface function of providing communication with a communication network. The network communication unit 120 transmits an image captured by the imaging unit 110 to a communication terminal via a communication network. The network communication unit 120 receives a signal transmitted from the communication terminal via the communication network and outputs the signal to the control signal transmission unit 130.

The control signal transmission unit 130 transmits a control signal for controlling an electric apparatus placed inside the premises on the basis of a signal output from the network communication unit 120, to the electric apparatus.

A control method performed in the control device 100 illustrated in Fig. 1 will be described below.

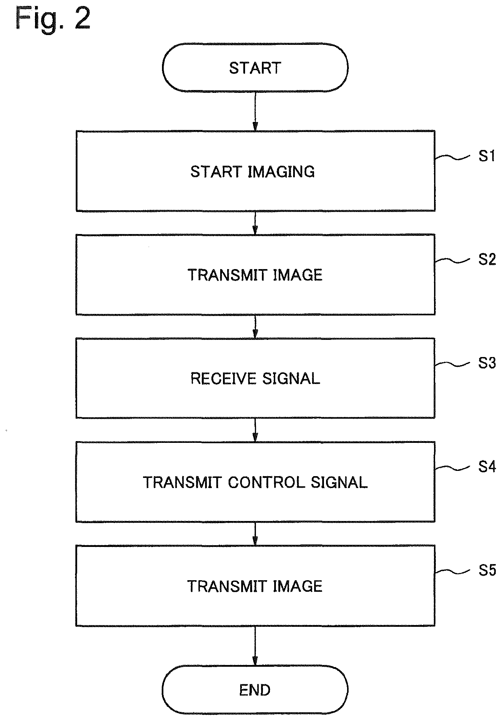

Fig. 2 is a flowchart illustrating an example of a control method performed in the control device 100 illustrated in Fig. 1.

First, the imaging unit 110 starts imaging (step S1). The imaging unit 110 may start imaging at a timing when the network communication unit 120 receives a predetermined signal from the communication terminal. The network communication unit 120 then transmits an image captured by the imaging unit 110 through imaging to the communication terminal (step S2).

Thereafter, when the network communication unit 120 receives a predetermined signal from the communication terminal (step S3), the control signal transmission unit 130 transmits a control signal for controlling an electric apparatus to the electric apparatus (step S4). Additionally, the network communication unit 120 transmits an image captured by the imaging unit 110 to the communication terminal (step S5). Here, when the imaging unit 110 is capturing moving images, the network communication unit 120 may continue transmitting moving images being captured by the imaging unit 110 during the period from step S2 through step S5.

In this way, based on an instruction from the communication terminal, the control device 100 transmits a control signal to an electric apparatus and transmits images captured through imaging to the communication terminal. Accordingly, one can remotely control the electric apparatus and readily check the result of the control.

### (Second Exemplary Embodiment)

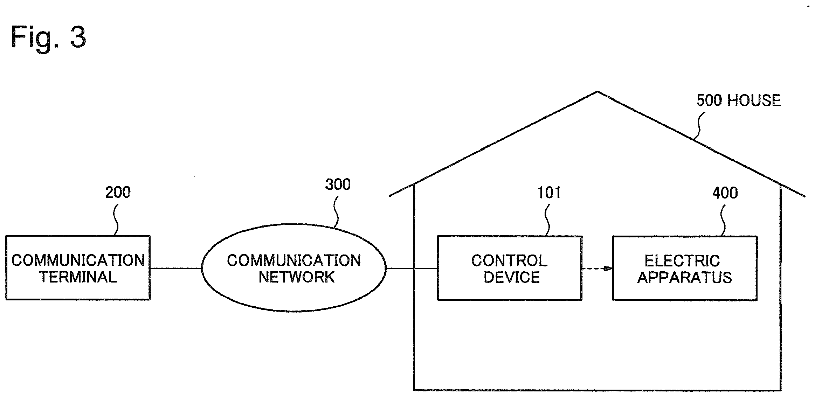

Fig. 3 is a diagram illustrating a second exemplary embodiment of a control device according to the present invention.

As illustrated in Fig. 3, the present exemplary embodiment is a communication system in which a control device 101 and a communication terminal 200 are connected via a communication network 300 and the control device 101 and an electric apparatus 400 are installed inside a house 500. Moreover, the electric apparatus 400 is configured to be able to receive a control signal transmitted from the control device 101.

The electric apparatus 400 includes an infrared reception function and is an electric apparatus, such as an air conditioner, a television set, lighting equipment, or a recorder, which is controlled with an infrared signal transmitted from a common remote controller or the like. There may be one electric apparatus 400 or a plurality of electric apparatuses 400 (such as an air conditioner and a television set). Further, each electric apparatus 400 is associated with a dedicated remote controller and a user who is in the house 500 (hereinafter referred to as the premises) operates the remote controller to control each associated electric apparatus 400.

Based on a signal transmitted from the communication terminal 200, the control device 101 transmits a control signal to the electric apparatus 400 using infrared radiation. Additionally, the control device 101 includes an imaging function and transmits an image captured through imaging to the communication terminal 200.

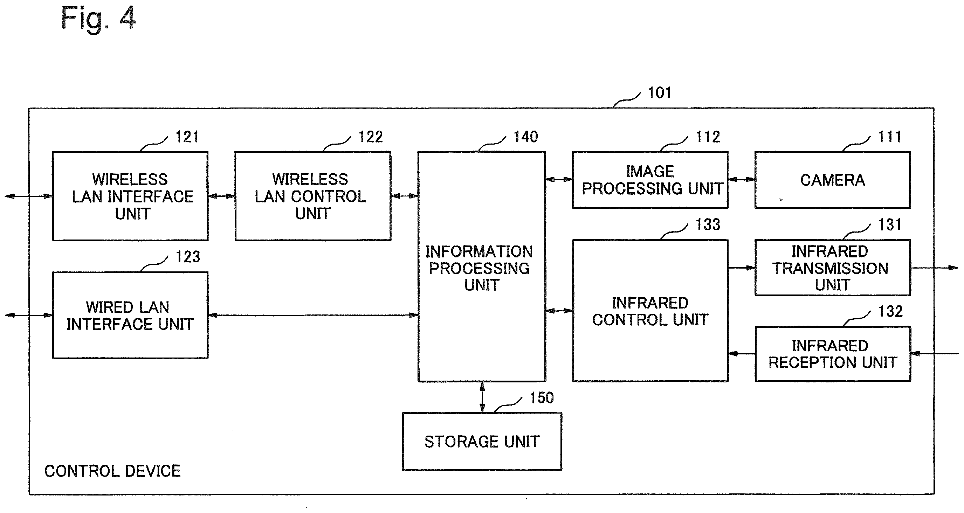

Fig. 4 is a diagram illustrating an example of an internal configuration of the control device 101 illustrated in Fig. 3.

As illustrated in Fig. 4, the control device 101 illustrated in Fig. 3 includes a camera 111, an image processing unit 112, a wireless LAN (Local Area Network) interface unit 121, a wireless LAN control unit 122, and a wired LAN interface unit 123. In addition, the control device 101 includes an infrared transmission unit 131, an infrared reception unit 132, an infrared control unit 133, an information processing unit 140 and a storage unit 150, as illustrated in Fig. 4. Note that Fig. 4 illustrates an example of primary components relating to the present exemplary embodiment among the components provided in the control device 101.

The camera 111 is an imaging unit including an imaging function. Moreover, images captured through imaging by the camera 111 are preferably moving images.

The image processing unit 112 performs predetermined processing on images captured by the camera 111.

The wireless LAN interface unit 121 includes the interface function between a wireless network. The wireless network herein may be a 5-GHz band wireless LAN complying with IEEE 802.11 ac/n/a standard or a 2.4-GHz band wireless LAN complying with IEEE 802. 11 n/g/b standard. The present exemplary embodiment is not limited by a wireless frequency band used. The same is true to the following description.

The wireless LAN control unit 122 controls the wireless LAN interface unit 121.

The wired LAN interface unit 123 is connected to a communication cable or the like and includes the interface function between a wired network. The control device 101 connects to the communication network 300 through the wireless LAN interface unit 121 or the wired LAN interface unit 123. Note that the wireless LAN interface unit 121, the wireless LAN control unit 122, and the wired LAN interface unit 123 forms a network communication unit.

The infrared transmission unit 131 transmits a control signal to the electric apparatus 400 using infrared radiation in response to an instruction from the infrared control unit 133. The control signal is a signal for performing control for causing the electric apparatus 400 to power on itself, control for causing the electric apparatus 400 to power off itself, and the like. Further, the infrared transmission unit 131 transmits an infrared radiation pattern (hereinafter referred to as an infrared remote control code) stored in the storage unit 150 as a control signal by using infrared radiation.

The infrared reception unit 132 receives infrared radiation transmitted from the remote controller attached to the electric apparatus 400.

The infrared control unit 133 controls transmission of infrared radiation from the infrared transmission unit 131. Further, the infrared control unit 133 analyzes an infrared remote control code on the basis of infrared radiation received by the infrared reception unit 132. The infrared control unit 133 may be the one that includes the function of learning infrared remote control codes.

The information processing unit 140 controls the image processing unit 112, the infrared control unit 133, the wireless LAN control unit 122, and the wired LAN interface unit 123.

The storage unit 150 stores infrared remote control codes. The infrared remote control codes include preset codes, codes analyzed by the infrared control unit 133, and codes learned by the infrared control unit 133.

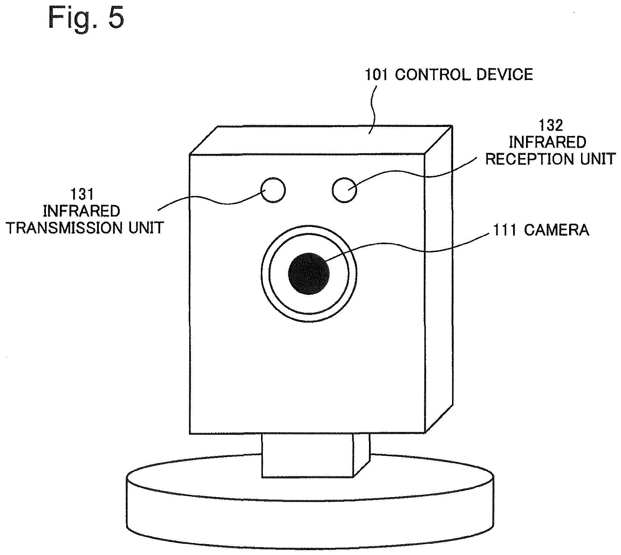

Fig. 5 is a diagram illustrating an example of an external view of the control device 101 illustrated in Fig. 3.

As illustrated in Fig. 5, in the control device 101 illustrated in Fig. 3, the camera 111 and the infrared transmission unit 131 are disposed such that the transmission direction in which the infrared transmission unit 131 transmits a control signal is included in the direction of the camera 111, i.e., the capturing area of the camera 111. Further, the infrared transmission unit 131 may employ an element that allows the infrared transmission unit 131 to transmit infrared radiation into a wider area so as to be configured to allow infrared radiation to be transmitted into areas around the capturing area of the camera 111. Note that although the infrared reception unit 132 in Fig. 5 is disposed in the same orientation as the infrared transmission unit 131, the orientation is not limited thereto.

The communication terminal 200 is a communication device carried by a user and is a mobile communication terminal such as a PC (Personal Computer) or a smartphone, for example.

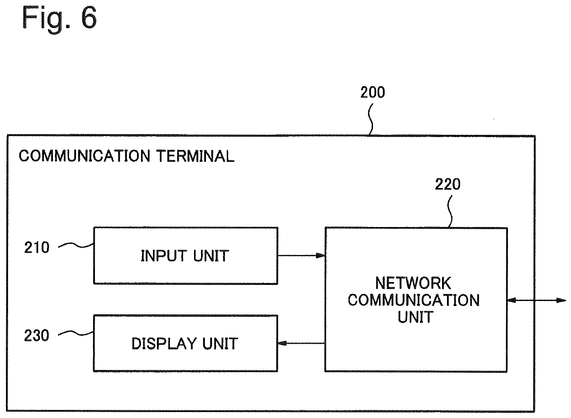

Fig. 6 is a diagram illustrating an example of an internal configuration of the communication terminal 200 illustrated in Fig. 3.

As illustrated in Fig. 6, the communication terminal 200 illustrated in Fig. 3 includes an input unit 210, a network communication unit 220, and a display unit 230. Note that Fig. 6 illustrates an example of primary components relating to the present exemplary embodiment among the components provided in the communication terminal 200.

The input unit 210 accepts an input of information on the basis of a user operation.

The network communication unit 220 includes an interface function of providing communication between the communication network 300. The network communication unit 220 transmits, to the control device 101, a signal based on an input accepted by the input unit 210 via the communication network 300.

The display unit 230 is a display that displays information. The display unit 230 displays images transmitted from the control device 101. Note that when the display unit 230 includes a touch panel function, the display unit 230 also functions as the input unit 210.

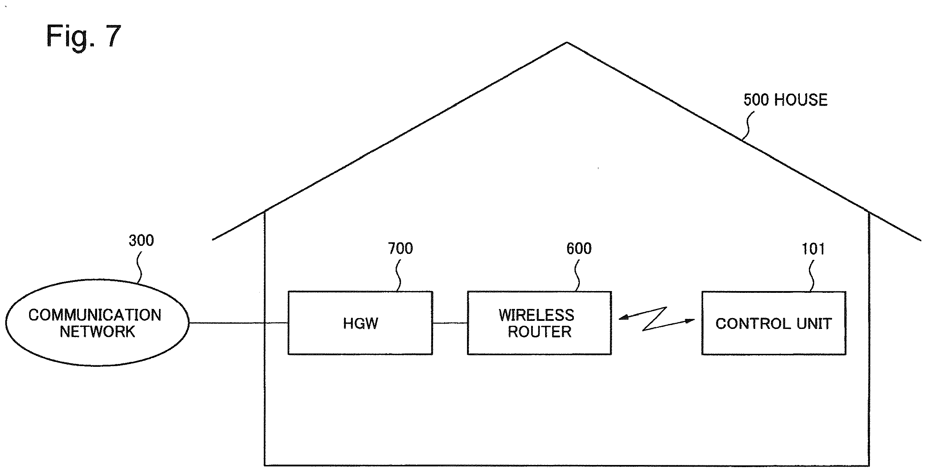

Fig. 7 is a diagram illustrating an example of connection of the control device 101 illustrated in Fig. 3 inside the premises.

As illustrated in Fig. 7, an HGW (Home Gate Way) 700 and a wireless router 600, which acts as a base unit, are installed inside the house 500. The communication network 300 and the HGW 700 are connected with each other and the wireless router 600 is connected under the control of the HGW 700. The control device 101 uses the wireless LAN interface unit 121 or the wired LAN interface unit 123 to connect to the wireless router 600. As a result, the control device 101 is placed under an Internet connection environment.

A control method in the mode illustrated in Fig. 3 will be described below.

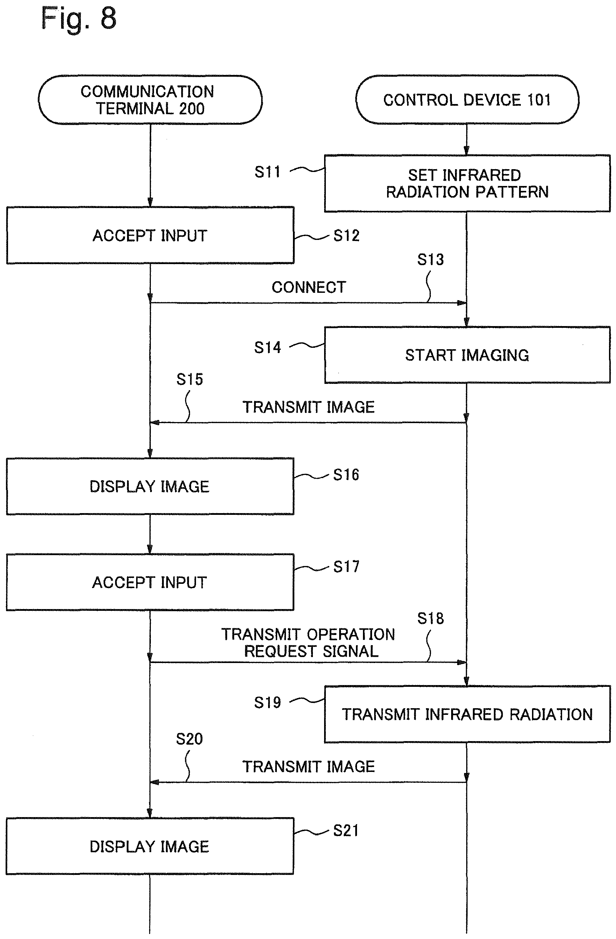

Fig. 8 is a sequence diagram illustrating an example of a control method in the communication system illustrated in Fig. 3.

It is assumed here that the control device 101 is connected to the communication network 300 as illustrated in Fig. 3 (Fig. 7) and is placed under the internet connection environment.

First, the information processing unit 140 of the control device 101 sets an infrared remote control code for controlling the electric apparatus 400 in the storage unit 150 (step S11). As one method for setting an infrared remote control code, a method of learning an infrared remote control code will be described by way of example. For example, there is described the case where an infrared remote control code for causing the control device 101 to learn an infrared remote control code for powering on an air conditioner, which is an electric apparatus 400 to be controlled. In this case, an infrared transmission unit of a dedicated remote controller for the air conditioner attached thereto is directed toward the infrared reception unit 132 of the control device 101 and a power on/off button on the remote controller is held down.

Then the infrared control unit 133 converts the infrared remote control code received by the infrared reception unit 132 to digital data, and outputs the digital data to the information processing unit 140. The information processing unit 140 then writes the infrared remote control code output from the infrared control unit 133 into the storage unit 150. Another method for setting an infrared remote control code may be to make a database of infrared remote control codes using some means in advance and store the database in the storage unit 150.

Thereafter, when a user away from home performs, on the input unit 210 of the communication terminal 200, an operation for accessing the control device 101, the input unit 210 accepts the input of information on the basis of the operation (step S12). Accordingly, the network communication unit 220 of the communication terminal 200 connects to the control device 101 (step S13). For the connection, a method such as UPnP (Universal Plug and Play) or DDNS (Dynamic Domain Name System), for example, is commonly used. Not limited to the above, other connection methods may be used; for example, a unique server may be provided between the communication terminal 200 and the control device 101 and connection may be made via the server. In the present exemplary embodiment, methods for connecting from the communication terminal 200 to the control device 101 are not specifically limited.

Then the camera 111 of the control device 101 starts imaging (step S14). Subsequently, the image processing unit 112 performs image processing on images being captured by the camera 111 through imaging. Moreover, the wireless LAN interface unit 121 or the wired LAN interface unit 123 transmits the images on which the image processing are performed to the communication terminal 200 via the communication network 300 (step S15).

When an image is transmitted from the control device 101, the display unit 230 of the communication terminal 200 displays the image (step S16). The user carrying the communication terminal 200 can check a state of the electric apparatus 400 by viewing the image displayed on the display unit 230.

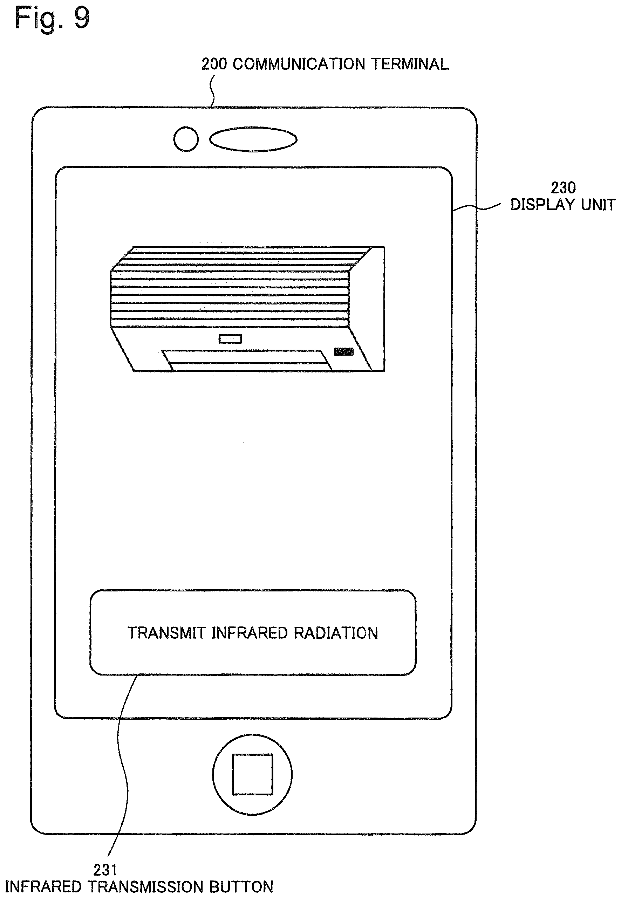

Fig. 9 is a diagram illustrating an example of an image displayed on the display unit 230 of the communication terminal 200 at step S16.

As illustrated in Fig. 9, an image captured by the camera 111 is displayed on the display unit 230. In this case, an image of the air conditioner in the power-off state is displayed on the display unit 230. In addition, an infrared transmission button 231 for instructing the control device 101 to transmit infrared radiation is displayed on the display unit 230.

Thereafter, when the user selects the infrared transmission button 231 displayed on the display unit 230 of the communication terminal 200, the input unit 210 accepts an input based on the selection (step S 17). The selection may be made by moving a cursor or, when the display unit 230 includes a touch panel function, by bringing a finger or the like close to or touching the infrared transmission button 231.

Then the network communication unit 220 transmits, to the control device 101, an operation request signal for requesting the control device 101 to transmit infrared radiation via the communication network 300 (step S18).

When the wireless LAN interface unit 121 or the wired LAN interface unit 123 receives a predetermined operation request signal from the communication terminal 200, the information processing unit 140 analyzes the operation request signal and retrieves an infrared remote control code from the storage unit 150. For example, an instance will be described where the infrared transmission button 231 is selected on the image illustrated in Fig. 9 and an operation request signal is transmitted. In this case, the operation request signal represents a request to power on the air conditioner and the information processing unit 140 retrieves the infrared remote control code for powering on the air conditioner from the storage unit 150.

Then, the infrared control unit 133 transmits the infrared remote control code retrieved by the information processing unit 140 from the storage unit 150 as a control signal, from the infrared transmission unit 131 to the electric apparatus 400 using infrared radiation (step S 19). In response to this, the electric apparatus 400 performs an operation based on the infrared remote control code transmitted from the infrared transmission unit 131. For example, when the infrared remote control code for powering on is transmitted, the electric apparatus 400 powers on itself.

Then the image processing unit 112 performs image processing on an image captured by the camera 111, and the wireless LAN interface unit 121 or the wired LAN interface unit 123 transmits the image to the communication terminal 200 via the communication network 300 (step S20). Here, when the camera 111 captures moving images, the wireless LAN interface unit 121 or the wired LAN interface unit 123 may continuously transmit moving images captured by the camera 111 and on which image processing is performed by the image processing unit 112. The transmission of moving images may continue during the period from step S15 through step S20.

When an image is transmitted from the control device 101, the display unit 230 of the communication terminal 200 displays the transmitted image (step S21). The user carrying the communication terminal 200 can check the result of the transmission of the infrared remote control code by viewing the image displayed on the display unit 230.

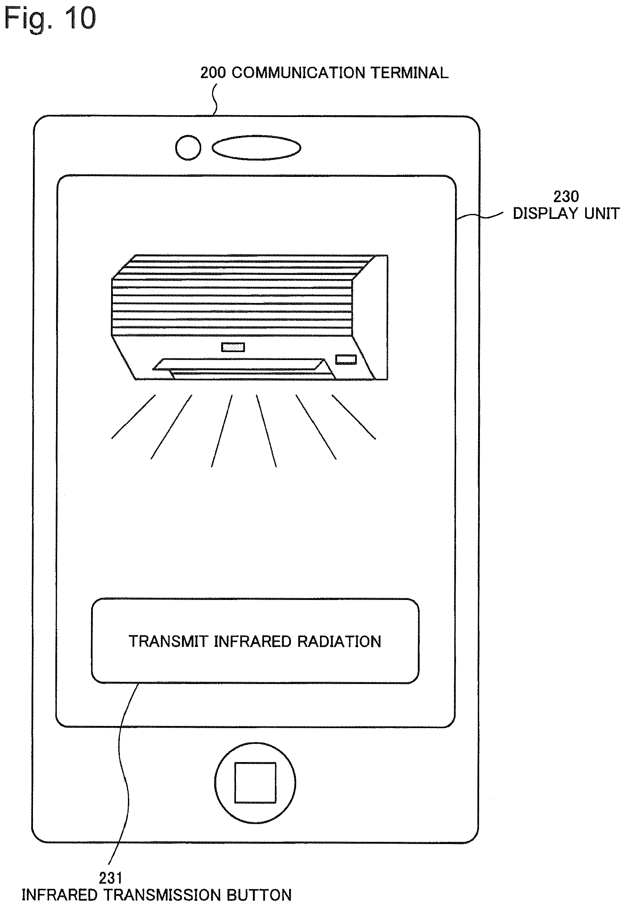

Fig. 10 is a diagram illustrating an example of the image displayed on the display unit 230 of the communication terminal 200 at step S21.

As illustrated in Fig. 10, an image captured by the camera 111 is displayed on the display unit 230. In this case, an image of the air conditioner in the power-on state is displayed on the display unit 230.

In a typical configuration, the control device 101 includes a GUI (Graphical User Interface). As the GUI of the control device 101 in the present exemplary embodiment, the control device 101 is provided with the function of allowing to display an image being presented by the control device 101 on the communication terminal 200, and the function of controlling the infrared remote control. Here, a method for checking a captured image on the control unit 101 from the communication terminal 200 and a method for performing the operation of transmitting infrared radiation may be implemented by installing a dedicated application on the communication terminal 200 and activating the application. Another method for implementing these operations may be to log into a Web GUI of the control device 101 from any browser on the communication terminal 200 to accomplish the operations. The process from step S16 through step S21 is performed from the communication terminal 200 via the GUI.

In this way, the communication terminal 200 displays images captured by the camera 111 through imaging. This enables infrared remote control while checking a state of the electric apparatus 400 inside the premises captured by the camera 111 from the communication terminal 200, and enables a check on the result of operating the electric apparatus 400 inside the premises by using the infrared remote control on a real time basis.

The present exemplary embodiment offers the following advantageous effects.

A first advantageous effect is that because the camera function and the infrared remote control function are integrated, the result of infrared remote control transmission remotely operated away from home can be viewed on camera images in real time away from home as more value-added video images.

A second advantageous effect is that because the camera function and the infrared remote control function are integrated, one can check to see whether lighting equipment, an air conditioner, or other apparatus inside the premises is on or off at the time when checking the conditions of the premises away from home. Enabling such checking makes it possible to correct, even when an unusual condition is detected in the premises, the condition in the environment while viewing state of the premises through camera images.

A third advantageous effect is that because the camera function and the infrared remote control function are integrated, it is possible to remotely operate an electric apparatus including a common infrared remote control function and to check the result of the remote operation. The remote operation and checking of the result of the remote operation do not require that the electric apparatus to be operated complies with a standard such as ECHONET Lite.

A fourth advantageous effect is that because the wireless function is provided, the wireless router, which acts as a base unit, and the control device 101 are wirelessly connected, and therefore the control device 101 can be flexibly placed in any location.

### (Third Exemplary Embodiment)

In a third exemplary embodiment, there is described a mode which makes it possible to change the direction in which images are captured and the direction in which infrared radiation is transmitted.

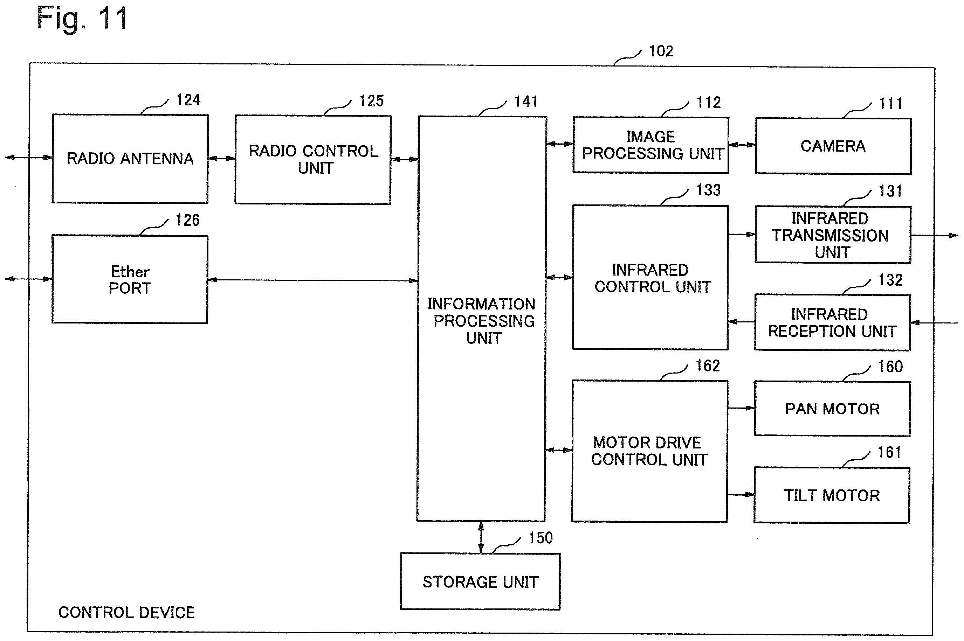

Fig. 11 is a diagram illustrating the third exemplary embodiment of a control device according to the present invention.

The control device 102 in the present exemplary embodiment includes a camera 111, an image processing unit 112, a radio antenna 124, a radio control unit 125, an Ether port 126, an infrared transmission unit 131, an infrared reception unit 132, and an infrared control unit 133. In addition, the control device 102 in the present exemplary embodiment includes an information processing unit 141, a storage unit 150, a pan motor 160, a tilt motor 161, and a motor drive control unit 162. Note that Fig. 11 illustrates an example of primary components relating to the present exemplary embodiment among the components provided in the control device 102 in the present exemplary embodiment.

The camera 111, the image processing unit 112, the infrared transmission unit 131, the infrared reception unit 132, the infrared control unit 133, and the storage unit 150 are the same as those in the second exemplary embodiment.

The radio antenna 124 transmits and receives radio signals.

The radio control unit 125 performs conversion between a radio signal and an electrical signal, and controls signals transmitted and received by the radio antenna 124.

The Ether port 126 has an Ethernet (Registered Trademark) interface function. The radio antenna 124, the radio control unit 125, and the Ether port 126 constitute a network communication unit.

The information processing unit 141 controls the image processing unit 112, the radio control unit 125, the Ether port 126, the infrared control unit 133, and the motor drive control unit 162.

The pan motor 160 is a motor for changing the direction of control unit 102 from side to side (swing motion) under the control of the motor drive control unit 162.

The tilt motor 161 is a motor that changes the direction of the control unit 102 up and down (swing motion) under the control of the motor drive control unit 162.

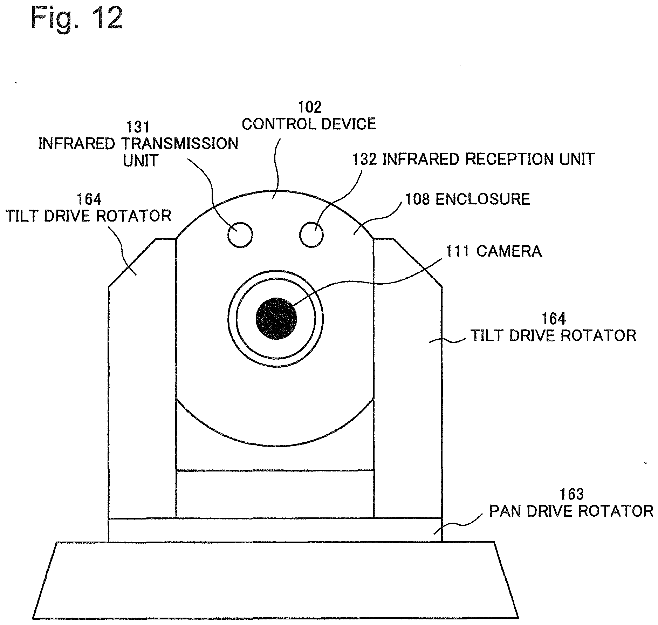

Fig. 12 is a diagram illustrating an example of external view of the control device 102 illustrated in Fig. 11.

As illustrated in Fig. 12, in the control device 102 illustrated in Fig. 11, the camera 111 and the infrared transmission unit 131 are disposed in an enclosure 108 such that the transmission direction in which the infrared transmission unit 131 transmits a control signal is included in the direction of the camera 111, i.e., the capturing area of the camera 111. Further, the infrared transmission unit 131 may employ an element that allows the infrared transmission unit 131 to transmit infrared radiation into a wider area so as to be configured to allow infrared radiation to be transmitted into areas around the capturing area of the camera 111. Note that while the infrared reception unit 132 in Fig. 12 is disposed in the enclosure 108 in the same orientation as the infrared transmission unit 131, the orientation is not limited thereto. Additionally, a pan drive rotator 163 and a tilt drive rotator 164 are disposed in the control unit 102.

The pan drive rotator 163 rotates the enclosure 108 in the horizontal direction in accordance with the drive by the pan motor 160. The tilt drive rotator 164 rotates the enclosure 108 in the vertical direction in accordance with the drive by the tilt motor 161. These rotations can change the orientation of the camera 111 and the infrared transmission unit 131.

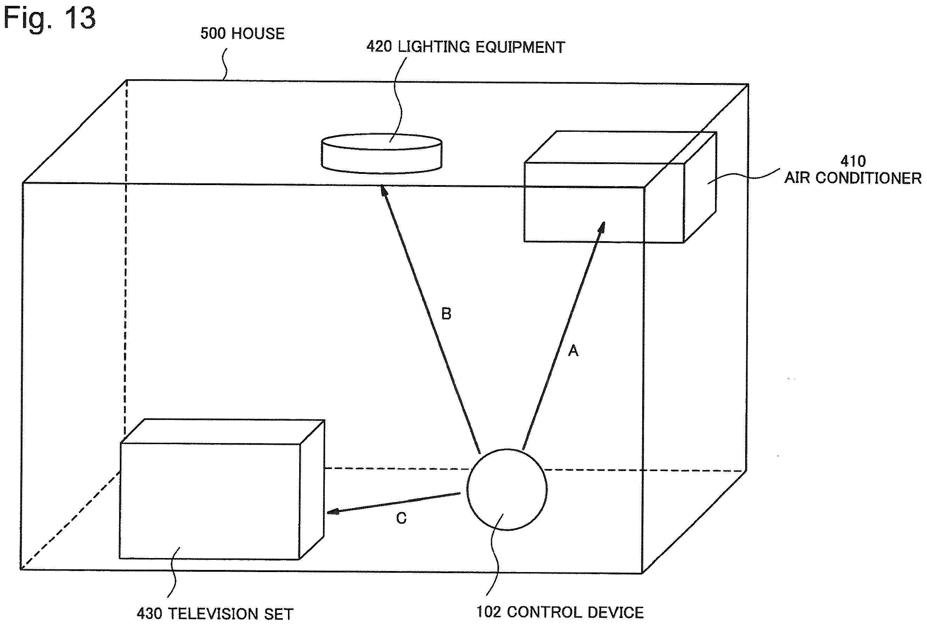

Fig. 13 is a diagram illustrating an arrangement example of a plurality of electric apparatuses inside premises.

As illustrated in Fig. 13, an air conditioner 410, lighting equipment 420, and a television set 430 are disposed apart from one another inside the premises 500. The air conditioner 410, the lighting equipment 420, and the television set 430 correspond to the electric apparatuses 400 in Fig. 3. A direction A of the air conditioner 410, a direction B of the lighting equipment 420, and a direction C of the television set 430 are different from one another with respect to the control device 102.

For example, in the arrangement illustrated in Fig. 13, when the capturing direction of the camera 111 of the control device 102 and the direction in which the infrared transmission unit 131 transmits infrared radiation are direction A, a state of the air conditioner 410 can be checked and controlled from the communication terminal 200. However, states of the lighting equipment 420 and the television set 430 cannot be checked and controlled from the communication terminal 200.

Thus, the information processing unit 141 outputs a predetermined signal to the motor drive control unit 162 and the motor drive control unit 162 performs signal control required for motor control to activate the pan motor 160 and the tilt motor 161 to drive. When the pan motor 160 and the tilt motor 161 is activated to drive, the pan drive rotator 163 and the tilt drive rotator 164 rotate in accordance with the drives. This enables to change the capturing direction of the camera 111 of the control device 102 and the direction in which the infrared transmission unit 131 transmits infrared radiation to the direction B towards the lighting equipment 420 or the direction C towards the television set 430.

The directional control may be accomplished by the storage unit 150 storing a control sequence in advance and the information processing unit 141 retrieving and performing the control sequence at a given timing. The sequence may be, for example: changing direction to direction B when the control device 102 completes control of the air conditioner 410; changing direction to direction C when the control device 102 completes control of the lighting equipment 420; and changing direction to direction A again when the control device 102 completes control of the television set 430. Here, the control of the air conditioner 410 includes capturing images of the air conditioner 410 and transmitting infrared radiation.

Alternatively, the information processing unit 141 may perform directional control in accordance with an instruction from the communication terminal 200. For example, when the display unit 230 of the communication terminal 200 displays an image captured by the camera 111, the display unit 230 may display such as arrows indicating left, right, up, and down for changing the capturing direction. The information processing unit 141 may then perform directional control in accordance with an arrow selected by the user.

The present exemplary embodiment offers the following additional advantageous effects.

A first additional advantageous effect is that the direction in which infrared radiation is transmitted can be controlled. This allows the control device 102 to be installed in any location inside the premises without taking into consideration the locations of the electric apparatuses to be remotely controlled.

A second additional advantageous effect is that electric apparatuses disposed in various locations inside the premises can be remotely controlled by an infrared remote control and can be checked using camera images.

A third additional advantageous effect is that because infrared radiation is transmitted in the direction in which an apparatus to be remotely operated by an infrared remote control is located, remote control transmission can always be performed in a positional relationship that maximizes directional characteristics. Thereby, it is possible to lengthen an effective transmission distance range of infrared remote control.

A fourth additional advantageous effect is that because infrared radiation is transmitted in the direction in which an apparatus to be remotely operated by infrared remote control is located, the infrared remote control transmission characteristics are not wasted. Thereby, remote control transmission can be performed with minimum transmission output, which contributes to reduction of power consumption of the infrared transmission unit.

While the first additional advantageous effect has been described as being capable of controlling the direction in which infrared radiation is transmitted, the effect of the method is not limited to infrared transmission. This method can be used for directional control of the transmission direction also when control methods other than infrared radiation are used. For example, the method can also be applied in the same manner when using wireless communication with high linearity (wireless communication with a high frequency such as 60 GHz) for transmitting control signals, instead of infrared radiation.

### (Fourth Exemplary Embodiment)

A mode that installs a motion detector function will be described below as a fourth exemplary embodiment.

A motion detector function is the function of performing a predetermined process when a certain amount of change occurs in a video footage captured with a camera. Installation of the motion detector function allows any predetermined operation (such as issuing notification to a specified address and/or start recording) to be automatically performed when an information processing unit detects a change in images output from an image processing unit. For example, the use of this function enables a control device to detect a power-on of lighting equipment or a television set and issue a notification to a communication terminal. In this manner, when a timer setting is set in an electric apparatus using an infrared remote control function, for example, the control device can detect the activation of the timer set in the electric apparatus and can issue a notification to the communication terminal. As a result, the result of an operation can be checked not only by real-time image checking, but convenience is significantly enhanced.

### (Fifth Exemplary Embodiment)

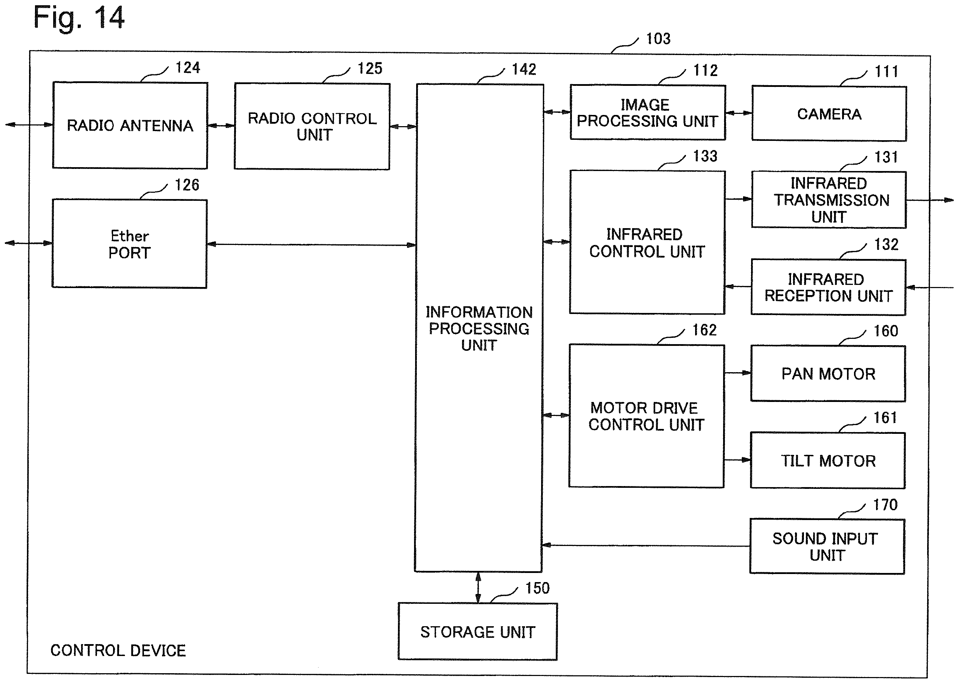

Fig. 14 is a diagram illustrating a fifth exemplary embodiment of a control device according to the present invention.

The control device 103 in the present exemplary embodiment includes a camera 111, an image processing unit 112, a radio antenna 124, a radio control unit 125, an Ether port 126, an infrared transmission unit 131, an infrared reception unit 132, and an infrared control unit 133. In addition, the control device 103 in the present exemplary embodiment includes an information processing unit 142, a storage unit 150, a pan motor 160, a tilt motor 161, a motor drive control unit 162, and a sound input unit 170. Note that Fig. 14 illustrates an example of primary components relating to the present exemplary embodiment among the components provided in the control device 103.

The camera 111, the image processing unit 112, the radio antenna 124, the radio control unit 125, the Ether port 126, the infrared transmission unit 131, the infrared reception unit 132, and the infrared control unit 133 are the same as those in the third exemplary embodiment. Moreover, the storage unit 150, the pan motor 160, the tilt motor 161, and the motor drive control unit 162 are the same as those in the third exemplary embodiment. The control device 103 in the present exemplary embodiment controls electric apparatuses such as an air conditioner, lighting equipment, and a television set, as in the third exemplary embodiment.

The information processing unit 142 controls the image processing unit 112, the radio control unit 125, the Ether port 126, the infrared control unit 133, the motor drive control unit 162, and the sound input unit 170.

The sound input unit 170 is a microphone or the like into which ambient sound is input. Further, the sound input unit 170 outputs the input sound to the information processing unit 142.

The information processing unit 142 transmits the sound output from the sound input unit 170 to a communication terminal 200 through the radio antenna 124 or the Ether port 126 along with images.

The communication terminal 200 displays the images transmitted from the control device 103, and reproduces the sound.

In this way, the control device 103 transmits ambient sound information to the communication terminal 200 in addition to images captured by the camera 111 and the communication terminal 200 reproduces the sound to allow a user to check the result of infrared transmission through images and sound.

### (Sixth Exemplary Embodiment)

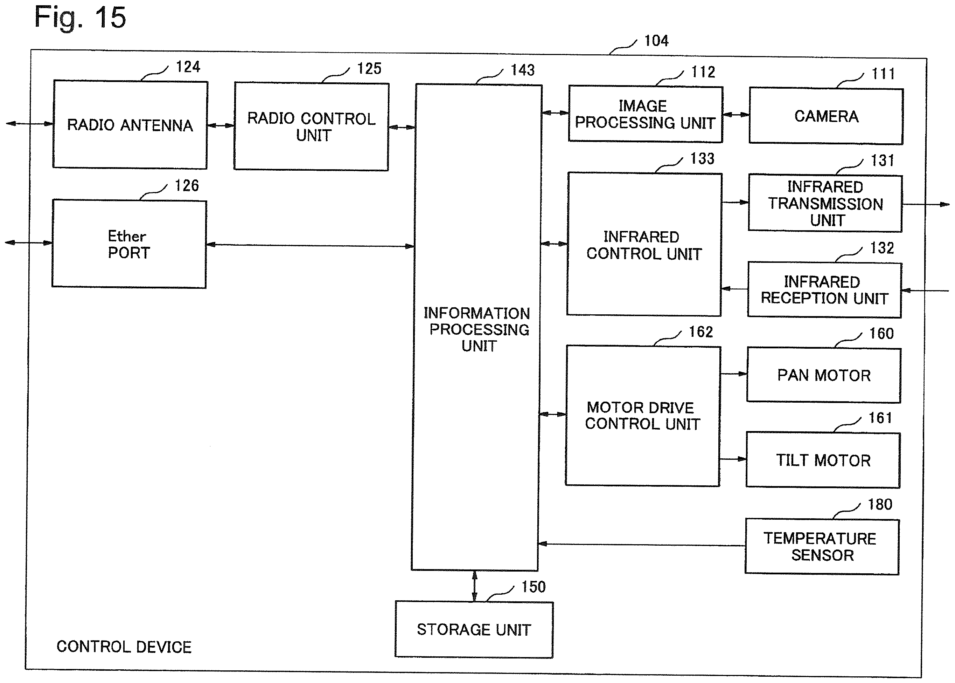

Fig. 15 is a diagram illustrating a sixth exemplary embodiment of a control device according to the present invention.

The control device 104 in the present exemplary embodiment includes a camera 111, an image processing unit 112, a radio antenna 124, a radio control unit 125, an Ether port 126, an infrared transmission unit 131, an infrared reception unit 132, and an infrared control unit 133. In addition, the control device 104 in the present exemplary embodiment includes an information processing unit 143, a storage unit 150, a pan motor 160, a tilt motor 161, a motor drive control unit 162, and a temperature sensor 180. Note that Fig. 15 illustrates an example of primary components relating to the present exemplary embodiment among the components provided in the control device 104.

The camera 111, the information processing unit 112, the radio antenna 124, the radio control unit 125, the Ether port 126, the infrared transmission unit 131, the infrared reception unit 132, and the infrared control unit 133 are the same as those in the third exemplary embodiment. Moreover, the storage unit 150, the pan motor 160, the tilt motor 161, and the motor drive control unit 162 are the same as those in the third exemplary embodiment. The control device 104 in the present exemplary embodiment controls electric apparatuses such as an air conditioner, lighting equipment, and a television set, as in the third exemplary embodiment.

The information processing unit 143 controls the image processing unit 112, the radio control unit 125, the Ether port 126, the infrared control unit 133, the motor drive control unit 162, and the temperature sensor 180.

The temperature sensor 180 measures the temperature inside the premises. The temperature sensor 180 outputs the measured temperature to the information processing unit 143.

The information processing unit 143 transmits the temperature (the value indicating temperature) output from the temperature sensor 180 to a communication terminal 200 through the radio antenna 124 or the Ether port 126 along with images.

The communication terminal 200 displays the image transmitted from the control device 104 and displays the temperature.

In this way, the control device 104 transmits information of the temperature in the premises to the communication terminal 200 in addition to an image captured by the camera 111 and the communication terminal 200 displays the temperature information and the image to allow the user to check conditions of an electric apparatus using the image and the temperature. For example, when the user sees that the temperature inside the premises has changed for some reasons, the user can perform an operation on the communication terminal 200 to transmit infrared radiation for powering on the air conditioner, thereby adjusting the temperature inside the premises.

Combination of the fourth exemplary embodiment described above with the mode illustrated in Fig. 15 allows the control device 104 to automatically sense a change in the ambient temperature and automatically transmit infrared radiation to an electric apparatus on the basis of the result of the sensing. The control device 104 can automatically determine the result of the infrared radiation transmission with camera images and can automatically issue a notification to the communication terminal 200 via the Internet. An electric apparatus here is an electric device such as the electric apparatus 400 depicted in Fig. 3, the air conditioner 410, the lighting equipment 420, or the television set 430 depicted in Fig. 13. It is assumed in the following description that the control device 104 controls an electric apparatus 400.

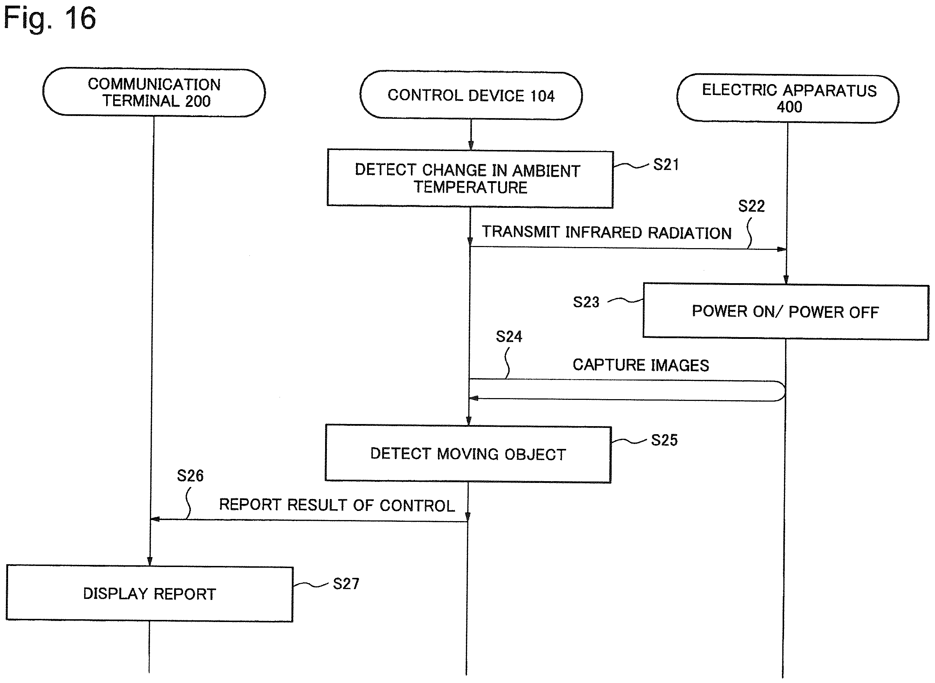

Fig. 16 is a sequence diagram illustrating an example of a control method in the sixth exemplary embodiment of the control device according to the present invention.

The control device 104 includes a temperature sensor 180 which constantly detects the ambient temperature. The control device 104 detects a change in the ambient temperature with its temperature sensor 180 at a certain moment (step S21). When the change in the ambient temperature is greater than or equal to a specified value preset in the control device 104, the control device 104 transmits infrared radiation from the infrared transmission unit 131 to the electric apparatus 400 for instructing the electric apparatus to power on (or power off) (step S22). The electric apparatus 400 receives the infrared signal and powers on (or power off) itself (step S23). The power-on (or power-off) of the electric apparatus 400 causes an operation to the apparatus and an image of the operation is captured by the camera 111 of the control device 104 through imaging (step S24). The control device 104 determines, with the motion detector function, that the electric apparatus 400 has operated (step S25). The control device 104 finds out that the electric apparatus 400 has operated and transmits (notifies of) the result to the communication terminal 200 via the Internet (step S26). The notification of the result includes the image captured by the camera 111.

Then the display unit 230 of the communication terminal 200 displays the notification transmitted from the control device 104 (step S27).

In this way, the control device 104 can automatically control the electric apparatus 400. Further, the result of the control can be automatically determined/recognized. Moreover, the user can immediately find out the result since the recognized result is automatically transmitted to the communication terminal 200.

### (Other Exemplary Embodiments)

As other exemplary embodiments, the present invention can be used in combination with a detector function using any of various sensors such as a door opening/shutting sensor, a motion sensor, a moisture sensor, and a gas sensor. By using input information from each sensor as an added-value, the process of changes in an electric apparatus to be operated can be checked using captured images, and besides, the result of an operation can be readily checked even when it is difficult to determine a change in the state of the electric apparatus to be operated only from captured images. This can significantly enhance convenience.

Further, by providing a control device with a night-vision function, the result of a remote control operation for an electric apparatus to be operated can be checked from images even when lighting equipment is powered off and the premises are dark.

Note that the exemplary embodiments described above may be combined.

The processing performed by each of the components provided in each of the control devices 100 to 104 described above may be performed by logic circuitry designed respectively for its purposes.

Exemplary embodiments of the present invention can also be implemented by causing each of the control devices 100 to 104 to read a computer program recorded on a recording medium and causing each of the control devices 100 to 104 to execute procedures in the computer program. The recording medium is the medium which can be read by each of the control devices 100 to 104 and has a computer program that describes processing contents as steps recorded thereon.

The recording medium which can be read by each of the control devices 100 to 104 refers to a removable recording medium such as a floppy (Registered Trademark) disk, a magneto-optical disk, a DVD (Digital Versatile Disk), a CD (Compact Disc) as well as a memory such as a ROM (Read Only Memory), a RAM (Random Access Memory), incorporated in each of the control devices 100 to 104, and an HDD (Hard Disk Drive) or the like.

The program recorded on the recording medium is read by a CPU (Central Processing Unit) such as a control unit provided in each of the control devices 100 to 104, and the processes as described above are performed under the control of the CPU. The CPU here operates as a computer that executes a program read from a recording medium on which the program is recorded.

The whole or part of the exemplary embodiments described above can also be described as in the following supplementary notes, but are not limited thereto.
(Supplementary Note 1) A control device comprising:
   an imaging unit which performs imaging to capture an image;
   a network communication unit which transmits the image captured by the imaging unit to a communication terminal via a communication network and receives a signal transmitted from the communication terminal via the communication network; and
   a control signal transmission unit which transmits a control signal for controlling an electric apparatus to the electric apparatus based on the signal received by the network communication unit.
(Supplementary Note 2) The control device according to Supplementary Note 1, comprising a storage unit which stores an infrared remote control code for controlling the electric apparatus,
   wherein the control signal transmission unit transmits the infrared remote control code stored in the storage unit as the control signal by using infrared radiation.
(Supplementary Note 3) The control device according to Supplementary Note 2, comprising an infrared control unit which learns the infrared remote control code,
   wherein the storage unit stores the infrared remote control code learned by the infrared control unit.
(Supplementary Note 4) The control device according to any one of Supplementary notes 1 to 3,
   wherein the imaging unit and the control signal transmission unit are disposed so that a transmission direction in which the control signal transmission unit transmits the control signal is included in a capturing area of the imaging unit.
(Supplementary Note 5) The control device according to Supplementary Note 4, comprising a motor which changes orientations of the imaging unit and the control signal transmission unit.
(Supplementary Note 6) The control device according to any one of Supplementary Notes 1 to 5, comprising a sound input unit,
   wherein the network communication unit transmits sound input into the sound input unit to the communication terminal via the communication network.
(Supplementary Note 7) The control device according to any one of Supplementary Notes 1 to 6, comprising a temperature sensor,
   wherein the network communication unit transmits a temperature measured by the temperature sensor to the communication terminal via the communication network.
(Supplementary Note 8) A communication system comprising:
   a communication terminal which, when accepting a predetermined input, transmits a signal based on the input; and
   a control device which has an imaging function, transmits an image captured using the imaging function to the communication terminal via a communication network, receives a signal transmitted from the communication terminal via the communication network, and transmits a control signal for controlling an electric apparatus to the electric apparatus based on the received signal;
   wherein the communication terminal displays an image transmitted from the control device.
(Supplementary Note 9) The communication system according to Supplementary Note 8, wherein
   the control device comprises a storage unit which stores an infrared remote control code for controlling the electric apparatus; and
   the control signal transmission unit transmits the infrared remote control code stored in the storage unit as the control signal by using infrared radiation.
(Supplementary Note 10) The communication system according to Supplementary Note 9, wherein
   the control device comprises an infrared control unit which learns the infrared remote control code; and
   the storage unit stores the infrared remote control code learned by the infrared control unit.
(Supplementary Note 11) The communication system according to any one of Supplementary Notes 8 to 10, wherein
   the imaging unit and the control signal transmission unit of the control device are disposed so that a transmission direction in which the control signal transmission unit transmits the control signal is included in a capturing area of the imaging unit.
(Supplementary Note 12) The communication system according to Supplementary Note 11, wherein
   the control device comprises a motor which changes orientations of the imaging unit and the control signal transmission unit.
(Supplementary Note 13) The communication system according to any one of Supplementary Notes 8 to 12, wherein
   the control device comprises a sound input unit; and
   the network communication unit transmits sound input into the sound input unit to the communication terminal via the communication network.
(Supplementary Note 14) The communication system according to any one of Supplementary Notes 8 to 13, wherein
   the control device comprises a temperature sensor; and
   the network communication unit transmits a temperature measured by the temperature sensor to the communication terminal via the communication network.
(Supplementary Note 15) A control method performing the processes of:
   performing imaging to capture an image;
   transmitting the captured image to a communication terminal via a communication network;
   receiving a signal transmitted from the communication terminal via the communication network; and
   transmitting a control signal for controlling an electric apparatus to the electric apparatus based on the received signal.
(Supplementary Note 16) The control method according to Supplementary Note 15, further performing the processes of:
   storing an infrared remote control code for controlling the electric apparatus; and
   transmitting the stored infrared remote control code as the control signal by using infrared radiation.
(Supplementary Note 17) The control method according to Supplementary Note 16, further performing the processes of:
   learning the infrared remote control code; and
   storing the learned infrared remote control code.
(Supplementary Note 18) The control method according to any one of Supplementary Notes 15 to 17, wherein
   a transmission direction in which the control signal is transmitted is included in a capturing area of imaging for capturing the image.
(Supplementary Note 19) The control method according to Supplementary Note 18, further performing the step of changing the capturing area and the transmission direction in which the control signal is transmitted.
(Supplementary Note 20) The control method according to any one of Supplementary Notes 15 to 19, further performing the processes of:
   inputting ambient sound; and
   transmitting the input sound to the communication terminal via the communication network.
(Supplementary Note 21) The control method according to any one of Supplementary Notes 15 to 20, further performing the processes of:
   measuring temperature; and
   transmitting the measured temperature to the communication device via the communication network.
(Supplementary Note 22) A program for causing a computer to execute the steps of:
   performing imaging to capture an image;
   transmitting the captured image to a communication terminal via a communication network;
   receiving a signal transmitted from the communication terminal via the communication network; and
   transmitting a control signal for controlling an electric apparatus to the electric apparatus based on the received signal.
(Supplementary Note 23) The program according to Supplementary Note 22, causing the computer to further execute the steps of:
   storing an infrared remote control code for controlling the electric apparatus; and
   transmitting the stored infrared remote control code as the control signal by using infrared radiation.
(Supplementary Note 24) The program according to Supplementary Note 23, causing the computer to further execute the steps of:
   learning the infrared remote control code; and
   storing the learned infrared remote control code.
(Supplementary Note 25) The program according to any one of Supplementary Notes 22 to 24, wherein
   a transmission direction in which the control signal is transmitted is included in a capturing area of imaging for capturing the image.
(Supplementary Note 26) The program according to Supplementary Note 25, causing the computer to further execute the step of changing the capturing area and the transmission direction in which the control signal is transmitted.
(Supplementary Note 27) The program according to any one of Supplementary Notes 22 to 26, causing the computer to further execute the steps of:
   inputting ambient sound; and
   transmitting the input sound to the communication terminal via the communication network.
(Supplementary Note 28) The program according to any one of Supplementary Notes 22 to 27, causing the computer to further execute the steps of:
   measuring temperature; and
   transmitting the measured temperature to the communication device via the communication network.

While the present invention has been described with reference to exemplary embodiments thereof, the present invention is not limited to the exemplary embodiments described above. Various modifications which are apparent to those skilled in the art can be made to the configurations and details of the present invention within the scope of the present invention.

This application is based upon and claims the benefit of priority from Japanese Patent Application No. 2014-108001 filed on May 26, 2014, the disclosure of which is incorporated herein in its entirety by reference.

### [Reference Signs List]

- 100-104: Control device
- 108: Enclosure
- 110: Imaging unit
- 111: Camera
- 112: Image processing unit
- 120, 220: Network communication unit
- 121: Wireless LAN interface unit
- 122: Wireless LAN control unit
- 123: Wired LAN interface unit
- 124: Radio antenna
- 125: Radio control unit
- 126: Ether port
- 130: Control signal transmission unit
- 131: Infrared transmission unit
- 132: Infrared reception unit
- 133: Infrared control unit
- 140-143: Information processing unit
- 150: Storage unit
- 160: Pan motor
- 161: Tilt motor
- 162: Motor drive control unit
- 163: Pan drive rotator
- 164: Tilt drive rotator
- 170: Sound input unit
- 180: Temperature sensor
- 200: Communication terminal
- 210: Input unit
- 230: Display unit
- 231: Infrared transmission button
- 300: Communication network
- 400: Electric apparatus
- 410: Air conditioner
- 420: Lighting equipment
- 430: Television set
- 500: House
- 600: Wireless router
- 700: HGW

## Claims

1. A control device comprising:
an imaging unit which performs imaging to capture an image;
a network communication unit which transmits the image captured by the imaging unit to a communication terminal via a communication network and receives a signal transmitted from the communication terminal via the communication network; and
a control signal transmission unit which transmits a control signal for controlling an electric apparatus to the electric apparatus based on the signal received by the network communication unit.

2. The control device according to claim 1, comprising a storage unit which stores an infrared remote control code for controlling the electric apparatus,
wherein the control signal transmission unit transmits the infrared remote control code stored in the storage unit as the control signal by using infrared radiation.

3. The control device according to claim 2, comprising an infrared control unit which learns the infrared remote control code,
wherein the storage unit stores the infrared remote control code learned by the infrared control unit.

4. The control device according to any one of claims 1 to 3, wherein
the imaging unit and the control signal transmission unit are disposed so that a transmission direction in which the control signal transmission unit transmits the control signal is included in a capturing area of the imaging unit.

5. The control device according to claim 4, comprising a motor which changes orientations of the imaging unit and the control signal transmission unit.

6. The control device according to any one of claims 1 to 5, comprising a sound input unit,
wherein the network communication unit transmits sound input into the sound input unit to the communication terminal via the communication network.

7. The control device according to any one of claims 1 to 6, comprising a temperature sensor,
wherein the network communication unit transmits a temperature measured by the temperature sensor to the communication terminal via the communication network.

8. A communication system comprising:
a communication terminal which, when accepting a predetermined input, transmits a signal based on the input; and
a control device which has an imaging function, transmits an image captured using the imaging function to the communication terminal via a communication network, receives a signal transmitted from the communication terminal via the communication network, and transmits a control signal for controlling an electric apparatus to the electric apparatus based on the received signal;
wherein the communication terminal displays an image transmitted from the control device.

9. A control method performing:
a process of performing imaging to capture an image;
a process of transmitting the captured image to a communication terminal via a communication network;
receiving a signal transmitted from the communication terminal via the communication network; and
a process of transmitting a control signal for controlling an electric apparatus to the electric apparatus based on the received signal.

10. A program for causing a computer to execute the steps of:
performing imaging to capture an image;
transmitting the captured image to a communication terminal via a communication network;
receiving a signal transmitted from the communication terminal via the communication network; and
transmitting a control signal for controlling an electric apparatus to the electric apparatus based on the received signal.
